# EUROPEAN PATENT APPLICATION

(11) **EP 4 379 937 A1**
(43) Date of publication of application: **05.06.2024**
(21) Application number: 22916616.0
(22) Date of filing: 22.12.2022
(51) Int. Cl.: H01M 50/383, H01M 50/204

(54) **BATTERY PACK, AND ESS AND VEHICLE COMPRISING SAME**

(30) Priority: 27.12.2021 KR 20210188646; 27.12.2021 KR 20210188747
(71) Applicant: LG Energy Solution, Ltd., Seoul 07335 (KR)
(72) Inventor: HONG, Sung-Goen, Daejeon 34122 (KR); KIM, Seung-Hyun, Daejeon 34122 (KR); OH, Young-Hoo, Daejeon 34122 (KR); OK, Seung-Min, Daejeon 34122 (KR); JO, Sang-Hyun, Daejeon 34122 (KR); CHO, Young-Bum, Daejeon 34122 (KR)
(74) Representative: Plasseraud IP
(86) International application number: PCT/KR2022/021125
(87) International publication number: WO 2023/128474

(57) **Abstract**

A battery pack according to an embodiment of the present disclosure includes a module assembly including a plurality of battery modules disposed along a first direction; a pack cover extending along the first direction and configured to cover one side of the module assembly; and a plurality of delay members disposed to be spaced apart from each other along the first direction within a space formed between the module assembly and the pack cover and configured to delay the flow of fluid moving along the first direction.

## Description

### TECHNICAL FIELD

The present disclosure relates to a battery pack, and an energy storage system (ESS) and a vehicle including the same.

The present application claims priority to Korean Patent Application No. 10-2021-0188646 filed on December 27, 2021 and Korean Patent Application No. 10-2021-0188747 filed on December 27, 2021, the disclosures of which are incorporated herein by reference.

### BACKGROUND ART

A battery pack applied to devices such as an energy storage system (ESS), an electric vehicle, and the like may be manufactured in a form including a plurality of battery modules to which a lithium secondary battery capable of realizing high output and high capacity is applied. In order to satisfy the output characteristics of a battery pack required by an electric vehicle and realize high capacity, the number of lithium secondary batteries included in one battery module may be increased, and the number of battery modules included in one battery pack may be increased.

However, in the case of a battery pack including such a large number of lithium secondary batteries, the damage is inevitably increased when a fire or explosion occurs.

A fire occurring in a battery pack starts from an abnormal temperature rise and internal gas generation of a lithium secondary battery disposed inside a battery module. When the temperature of the lithium secondary battery rises abnormally and the internal pressure of the lithium secondary battery rises above a certain level due to the generation of internal gas, venting occurs in the lithium secondary battery, whereby high-temperature gas is ejected to the outside of the lithium secondary battery, and high-temperature sparks including an electrode active material and aluminum particles are ejected.

In order to ensure safety of the battery pack in use, the venting gas should be rapidly discharged to the outside of the battery pack so that the internal pressure of the battery pack is no longer increased when an event occurs. However, when high-temperature sparks together with the venting gas are discharged to the outside of the battery pack, the venting gas, the high-temperature sparks, and oxygen may meet and cause a fire.

Therefore, even if a thermal event occurs due to an abnormal phenomenon such as a short circuit inside a battery cell, there is a need to develop a battery pack having a structure that may quickly discharge the venting gas to the outside of the battery pack, but may effectively prevent high-temperature sparks including an electrode active material and aluminum particles from leaking to the outside.

### DISCLOSURE

### Technical Problem

The present disclosure is designed to solve the problems of the related art, and therefore the present disclosure is directed to providing a battery pack configured to rapidly discharge venting gas to the outside of the battery pack when a thermal event occurs in the battery pack and to effectively prevent high-temperature spark material from leaking to the outside.

However, technical problems to be solved by the present disclosure are not limited to the above-described problems, and other problems not mentioned herein may be clearly understood by those skilled in the art from the following description of the present disclosure.

### Technical Solution

A battery pack according to an embodiment of the present disclosure for solving the above-described problems includes a module assembly including a plurality of battery modules disposed along a first direction; a pack cover extending along the first direction and configured to cover one side of the module assembly; and a plurality of delay members disposed to be spaced apart from each other along the first direction within a space formed between the module assembly and the pack cover and configured to delay the flow of fluid moving along the first direction.

The plurality of delay members may be configured to delay the flow of venting gas and spark material discharged due to a thermal event occurring in at least some of the plurality of battery modules.

The plurality of delay members may be configured to allow the venting gas among the venting gas and spark material discharged due to a thermal event occurring in at least some of the plurality of battery modules to move along the first direction, and at least partially prevent the spark material from moving along the first direction.

Each of the plurality of battery modules may include a discharge portion formed on one side facing the pack cover and configured to discharge venting gas and spark material generated by a thermal event.

The battery pack may include an opening configured such that a space formed between the module assembly and the pack cover communicates with the outside at an end portion of the battery pack in the first direction.

At least one of the plurality of delay members nay be provided at a position corresponding to the discharge portion.

At least one of the plurality of delay members may include a pair of delay plates spaced apart from each other along the first direction.

The pair of delay plates may have a shape inclined in opposite directions such that a flow path formed between the pair of delay plates gradually widens along a direction from the discharge portion toward the pack cover.

The pair of delay plates may have a shape inclined in the same direction such that a flow path formed between the pair of delay plates faces the first direction.

Each of the pair of delay plates may be configured such that both a gap between one end facing the pack cover and the pack cover and a gap between the other end facing the module assembly and the module assembly are open.

Each of the pair of delay plates may be configured such that any one of a gap between one end facing the pack cover and the pack cover and a gap between the other end facing the module assembly and the module assembly is closed, and the other one is open.

Each of the pair of delay plates may be configured such that the one end is spaced apart from the pack cover.

Any one of the pair of delay plates may be configured such that a gap between the one end and the pack cover is closed, and the other one of the pair of delay plates may be configured such that a gap between the other end and the module assembly is closed.

The battery pack may include an opening cover configured to cover the opening and having a mesh structure.

At least some of the plurality of delay members may be filters at least partially having a mesh structure.

An ESS according to an embodiment of the present disclosure for solving the above-described problems includes a battery pack of the present disclosure as described above.

A vehicle according to an embodiment of the present disclosure for solving the above-described problems includes a battery pack of the present disclosure as described above.

### Advantageous Effects

According to one aspect of the present disclosure, when a thermal event occurs inside the battery pack, the venting gas may be rapidly discharged to the outside of the battery pack, and high-temperature spark material may be effectively prevented from leaking to the outside of the battery pack.

However, advantageous effects to be obtained by the present disclosure are not limited to the above-described effects, and other effects not mentioned herein may be clearly understood by those skilled in the art from the following description of the present disclosure.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view showing a battery pack according to an embodiment of the present disclosure.
FIG. 2 is a view showing the internal structure of the battery pack shown in FIG. 1.
FIG. 3 is a conceptual view for describing the flow of venting gas discharged from a battery module in which a thermal event occurs in the battery pack of the present disclosure.
FIG. 4 is a view showing a state in which a pack cover and a delay member are removed from the battery pack shown in FIG. 1.
FIG. 5 is a view showing the flow of fluid between a module assembly and a pack cover in the battery pack shown in FIG. 1.
FIG. 6 is a view showing a battery module according to an embodiment of the present disclosure.
FIG. 7 is a view showing an opening formed in the battery pack of the present disclosure.
FIGS. 8 to 10 are views showing the arrangement position and arrangement angle of the delay member of the present disclosure.
FIG. 11 is a conceptual view illustratively showing the formation position of the opening and the arrangement of the delay member of the present disclosure.
FIGS. 12 to 14 are views for describing the formation position of the flow path according to the arrangement of the delay member of the present disclosure.
FIG. 15 is a view showing an exemplary form of the opening cover of the present disclosure.
FIG. 16 is a view showing a case where the delay member of the present disclosure is a filter having a mesh structure.
FIG. 17 is a view showing an energy storage system (ESS) according to an embodiment of the present disclosure.
FIG. 18 is a view showing a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

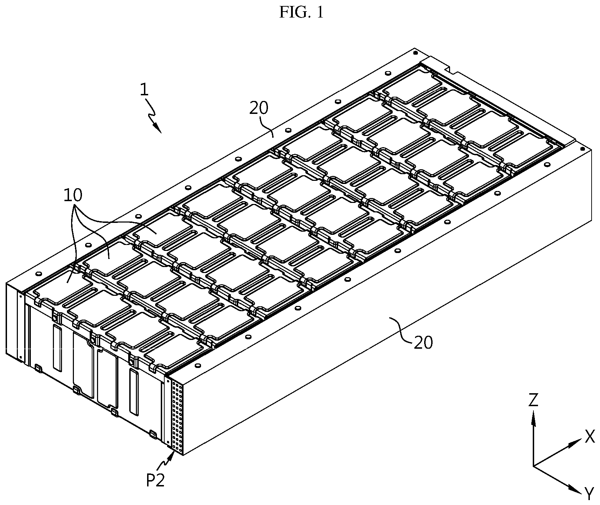

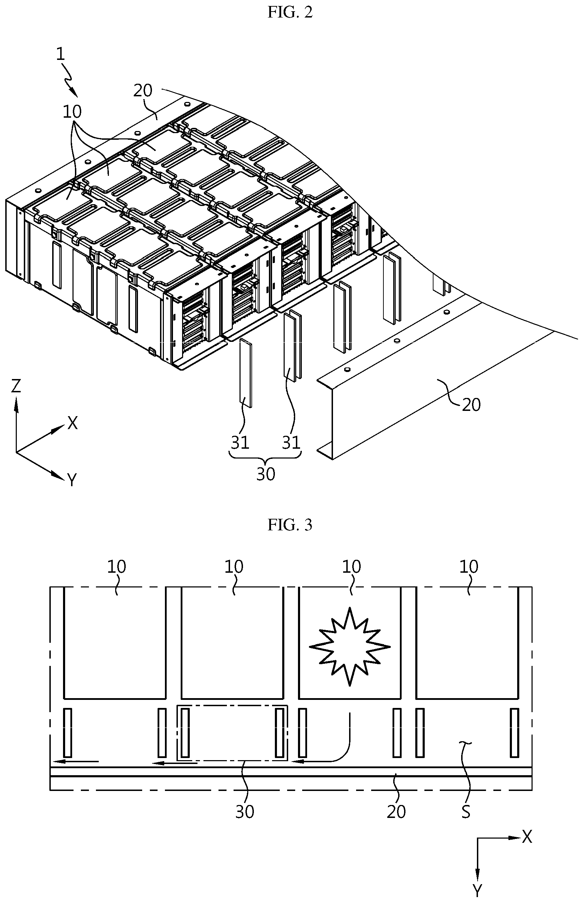

Referring to FIGS. 1 to 3, a battery pack 1 according to an embodiment of the present disclosure may include a module assembly, a pack cover 20, and a plurality of delay members 30. The module assembly may include a plurality of battery modules 10 disposed along a first direction (a direction parallel to the X-axis). The pack cover 20 may extend along the first direction. The pack cover 20 may be configured to cover one side of the module assembly. The plurality of delay members 30 may be disposed in a space S (see FIG. 3) formed between the module assembly and the pack cover 20. The plurality of delay members 30 may be disposed to be spaced apart from each other along the first direction within the space S. The plurality of delay members 30 may be configured to delay the flow of fluid moving along the first direction.

According to the battery pack 1 of the present disclosure configured as described above, the movement of the fluid discharged to the space S may be delayed due to a thermal event generated in at least some of the plurality of battery modules 10. Therefore, it is possible to delay or prevent the spread of a thermal event to adjacent battery modules 10.

The discharge pressure of the fluid discharged due to a thermal event may be very high. Therefore, when the movement speed of the discharged fluid due to the occurrence of a thermal event may not be slowed down, most of the discharged material may escape to the outside of the battery pack within a short period of time, and thus external oxygen may rapidly flow into the battery pack 1. When oxygen is quickly supplied into the battery pack 1 in this way, a high-temperature material remaining inside the battery pack 1 meets oxygen, which may cause a fire. According to the configuration of the battery pack 1 of the present disclosure, it is possible to prevent such a sharp decrease in internal pressure, thereby preventing the occurrence of an internal fire due to reverse inflow of oxygen.

The plurality of delay members 30 may be configured to delay the flow of venting gas and spark material discharged due to a thermal event generated in at least some of the plurality of battery modules 10. The spark material may include an electrode active material and a metal (e.g., aluminum) inside the secondary battery.

When a fluid including a high-temperature venting gas and a high-temperature spark material that may be generated as a thermal event occurs inside the battery pack 1 meets oxygen, the condition for ignition may be satisfied. Therefore, the spread of the thermal event may be delayed or prevented by delaying the flow of the fluid discharged according to the thermal event.

The plurality of delay members 30 may be configured to allow movement of the venting gas along the first direction and at least partially block movement of the spark material along the first direction, among the venting gas and the spark material discharged due to a thermal event generated in at least some of the plurality of battery modules 10.

Among the high-temperature venting gas and high-temperature spark material that may be generated as a thermal event occurs inside the battery pack 1, the venting gas is a gas, so the internal pressure of the battery pack 1 may be reduced by discharging the venting gas to the outside. In particular, when the time for the venting gas to be discharged to the outside is delayed, the temperature of the venting gas may drop, and accordingly, the risk of discharging the venting gas may also be reduced. On the other hand, since the high-temperature spark material is a solid-phase material, its discharge to the outside of the battery pack 1 may be greatly suppressed due to the presence of the delay member 30. Accordingly, it is possible to prevent a fire from occurring when a high-temperature venting gas, a high-temperature spark material, and a sufficient amount of oxygen meet outside the battery pack 1.

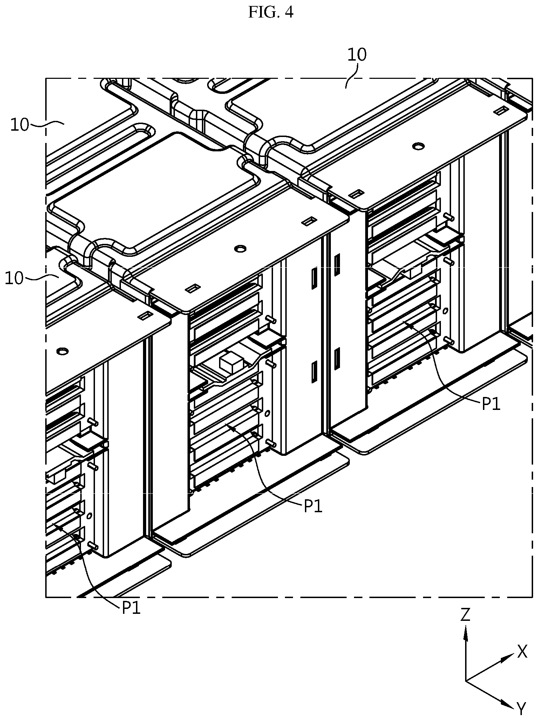

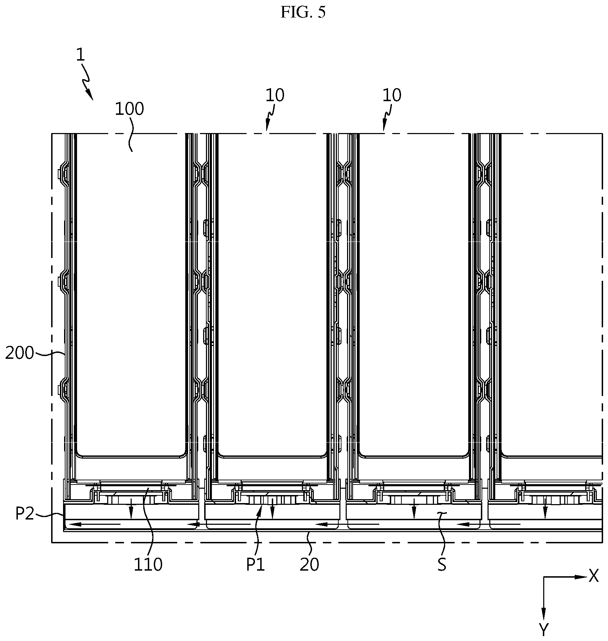

Referring to FIGS. 4 and 5, each of the plurality of battery modules 10 may include a discharge portion P1 configured to discharge venting gas and spark material when a thermal event occurs. In the battery module 10, the discharge portion P1 may be formed on one side facing the pack cover 20.

In the drawings of the present disclosure, only the discharge portion P1 formed on one side of the battery module 10 is illustrated, but the present disclosure is not limited thereto. The discharge portion P1 may be provided on both one side and the other side of the battery module 10. When the discharge portion P1 is provided on both one side of the battery module 10 and the other side opposite thereto in this way, the pack cover 20 may also be provided on both one side and the other side of the module assembly to form a space S through which the fluid discharged from the discharge portion P1 may move during a thermal event.

The internal space of the battery module 10 may communicate with the space S formed between the battery module 10 and the pack cover 20 through the discharge portion P1. In this case, the venting gas discharged to the outside of the battery module 10 through the discharge portion P1 may be rapidly discharged to the outside of the battery pack 1 through the space S.

Meanwhile, the discharge portion P1 may be intentionally formed in the battery module 10 to discharge venting gas during a thermal event, or may be unavoidably formed due to the structure of the battery module 10.

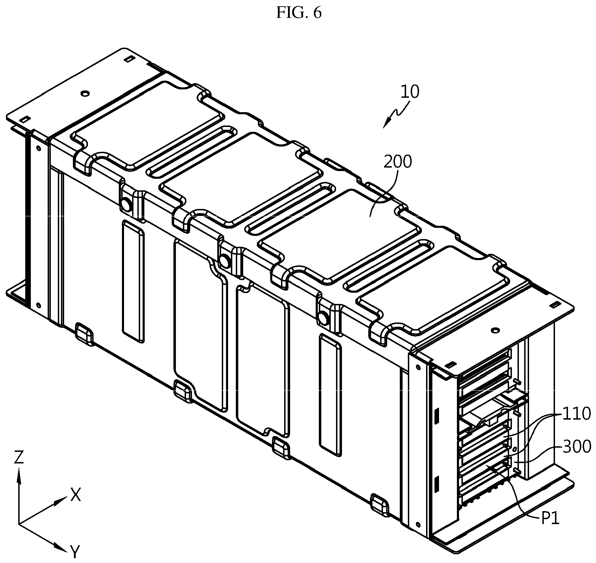

FIG. 6 shows an exemplary form of the battery module 10 of the present disclosure. Referring to FIG. 6 together with FIG. 5, the battery module 10 may include a battery cell 100 and a module housing 200. The battery cell 100 may be provided in plurality. The battery cell 100 may include an electrode lead 110 electrically connected to an electrode assembly (not shown) therein. The electrode lead 110 may extend, for example, in a direction from the electrode assembly toward the space S. The electrode lead 110 may be provided in pairs, and the pair of electrode leads 110 may extend in the same direction or in opposite directions to each other.

The module housing 200 may be configured to accommodate at least one battery cell 100. The module housing 200 may have a shape in which at least one side thereof is open. The internal space of the module housing 200 may communicate with the space S formed between the battery module 10 and the pack cover 20 through one open side of the module housing 200. The open area of the module housing 200 may function as the above-described discharge portion P1.

The battery module 10 may include a cover frame 300 configured to cover an open area formed in the module housing 200. The cover frame 300 may have a lead passage configured to allow the electrode lead 110 provided in the battery cell 100 to pass therethrough. When the battery cell 100 is provided in plurality, the electrode leads 110 of each of the adjacent battery cells 100 may pass through one lead passage or each different lead passage. The plurality of electrode leads 110 passing through the lead passage may be electrically connected to each other. The electrical connection between the electrode leads 110 may be made, for example, by welding between the electrode leads 110 or by a separate bus bar.

When the battery module 10 of the present disclosure includes the cover frame 300 as described above, the discharge portion P1 of the present disclosure may include a gap formed between the lead passage formed in the cover frame 300 and the electrode lead 110. That is, the venting gas and spark material discharged by venting one or more battery cells 100 may be introduced into the space S through the gap. Meanwhile, when high-temperature venting gas and spark material are generated inside the battery module 10 due to a thermal event, the cover frame 300 may be damaged. In this case, a space in which the venting gas and spark material may be discharged may be expanded.

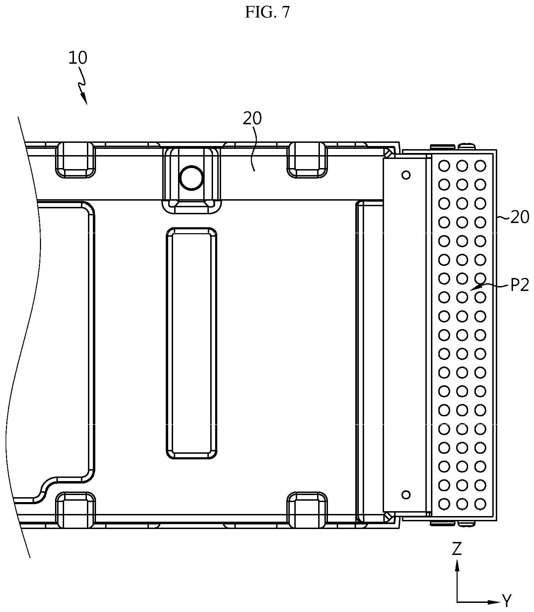

Referring to FIGS. 5 and 7, the battery pack 1 may include an opening P2 configured to communicate the space S formed between the module assembly and the pack cover 20 with the outside at the end of a first direction (a direction parallel to the X-axis) of the battery pack 1. The opening P2 may be formed on only one side of the pack cover 20 in the extension direction (a direction parallel to the X-axis), or may be formed on both sides.

The battery pack 1 of the present disclosure has at least one opening P2, so that the venting gas introduced into the space S according to a thermal event generated in at least some of the plurality of battery modules 10 included in the module assembly may be quickly discharged along the extension direction of the space S.

As shown in FIG. 7, the opening P2 may include a plurality of holes formed on one surface of the pack cover 20. However, the present disclosure is not limited thereto, and may function as the opening P2 of the present disclosure if it is configured such that the venting gas introduced into the space S between the module assembly and the pack cover 20 may move along the extension direction (a direction parallel to the X-axis) of the space S and then be discharged to the outside of the battery pack 1.

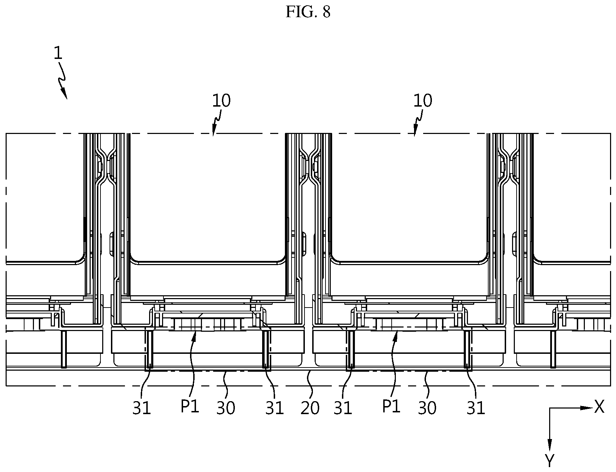

Referring to FIG. 8 together with FIG. 5, at least one of the plurality of delay members 30 may be provided at a position corresponding to the discharge portion P1 provided in the battery module 10. When the delay member 30 is provided at a position corresponding to the discharge portion P1, the movement direction and discharge speed of the fluid discharged from the battery module 10 may be controlled. At least one of the plurality of delay members 30 may include a pair of delay plates 31 spaced apart from each other along a first direction (a direction parallel to the X-axis). The pair of delay plates 31 may be located on one side and the other side of the discharge portion P1, respectively.

FIG. 8 of the present disclosure illustrates only a case where the delay plate 31 contacts both the battery module 10 and the pack cover 20 on a plane (a plane parallel to the X-Y plane), but the present disclosure is not limited thereto. The delay plate 31 may be in contact with or spaced apart from the battery module 10 and/or the pack cover 20.

In addition, even if the delay plate 31 contacts both the battery pack 1 and the pack cover 20 when viewed on a plane (X-Y plane), the minimum objective of the present disclosure may be achieved if a passage through which the venting gas may move is formed along the first direction (a direction parallel to the X-axis) within the space S (see FIG. 5) formed between the module assembly and the pack cover 20. For example, the passage for the movement of the venting gas may be a hole and/or a slit formed in the delay plate 31 itself. In addition, the passage for the movement of the venting gas may be formed between the ceiling of the space S and the delay plate 31 and/or between the floor of the space S and the delay plate 31.

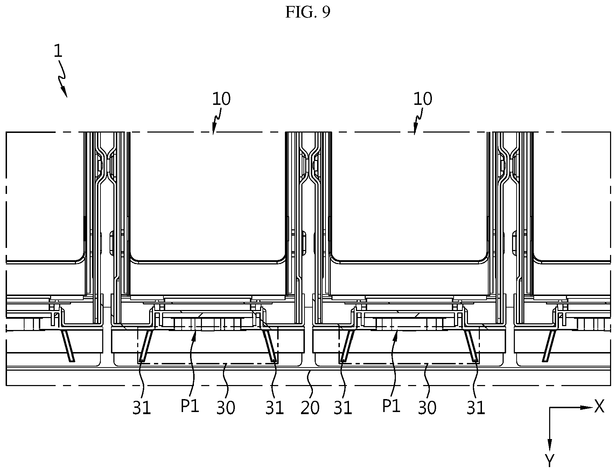

Referring to FIG. 9 together with FIG. 5, the pair of delay plates 31 may have a shape inclined in opposite directions when viewed on a plane (a plane parallel to the X-Y plane). For example, the pair of delay plates 31 may have a shape inclined in opposite directions such that a flow path formed between the pair of delay plates 31 gradually widens along a direction from the discharge portion P1 toward the pack cover 20. When the delay member 30 is configured in this way, the flow rate of the fluid discharged from the discharge portion P1 may be reduced. On the other hand, in the present disclosure, the delay plate 31 having an inclined shape may mean that it is inclined at a predetermined angle based on a direction (a direction parallel to the Y-axis) from the discharge portion P1 toward the pack cover 20.

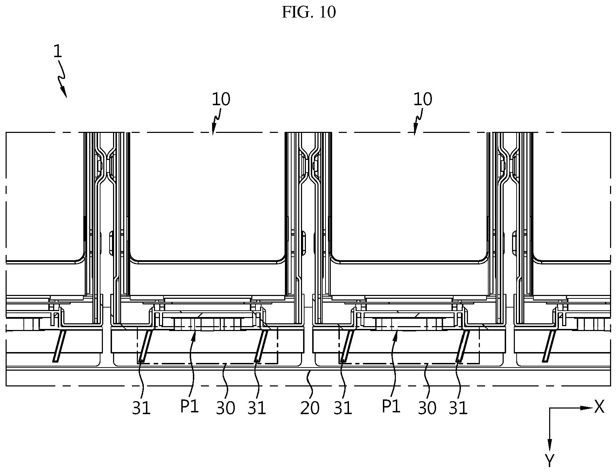

Referring to FIG. 10 together with FIG. 5, the pair of delay plates 31 may have a shape inclined in the same direction. For example, the pair of delay plates 31 may have a shape inclined in the same direction such that a flow path formed between the pair of delay plates 31 faces a first direction (a direction parallel to the X-axis). In this case, the flow of the fluid discharged from the discharge portion P1 may be controlled to face the opening P2 or the opposite direction of the opening P2, thereby maximizing the effect of improving the discharge smoothness of the venting gas and/or the effect of suppressing the discharge of the spark material, as required.

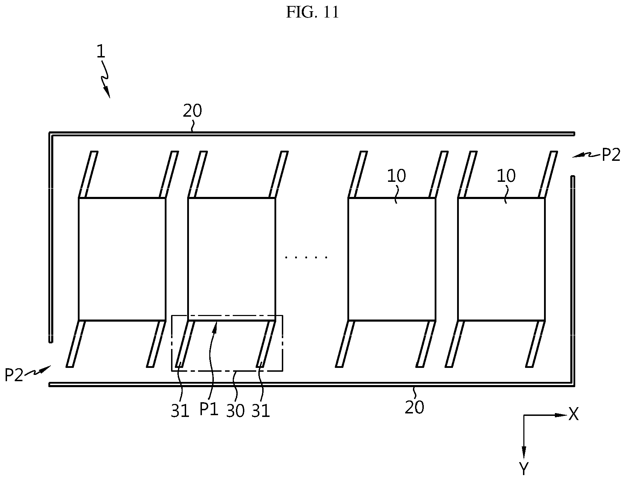

Next, referring to FIG. 11 together with FIGS. 5 and 10, the opening P2 of the present disclosure may be provided on one side of the extension direction of the space S (hereinafter referred to as the first space) formed between one side of the module assembly and the pack cover 20 and on the other side of the extension direction of the space S (hereinafter referred to as the second space) formed between the other side of the module assembly and the pack cover 20, respectively. In this case, any one of the opening P2 directly communicating with the first space S (hereinafter referred to as the first opening) and the opening P2 directly communicating with the second space S (hereinafter referred to as the second opening) may function as a passage for the inflow of a cooling fluid (for example, cooling air) for cooling the battery pack 1, and the other one may function as a passage for the outflow of the cooling fluid. For example, an air flow may be formed in a direction from the first opening P2 toward the second opening P2 or in the opposite direction by driving a cooling fan (not shown), thereby allowing the cooling air to flow into the battery pack 1 and then escape to the outside after heat exchange with the module assembly therein. However, in a situation where a thermal event occurs other than a normal use state, the operation of the device for cooling may be stopped, and in this case, both the first opening P2 and the second opening P2 may function as passages for the discharge of venting gas. Therefore, the delay members 30 disposed within the first space S are disposed in an inclined shape in a direction toward the first opening P2 and the delay members 30 disposed within the second space S are disposed in an inclined shape in a direction toward the second opening P2, whereby the discharge of the venting gas may be made smoother. Conversely, the delay members 30 disposed within the first space S are disposed in an inclined shape toward the opposite direction of the first opening P2 and the delay member 30 disposed within the second space S are disposed in an inclined shape toward the opposite direction of the second opening P2, whereby it is also possible to delay the flow of the venting gas and suppress the discharge of the spark material.

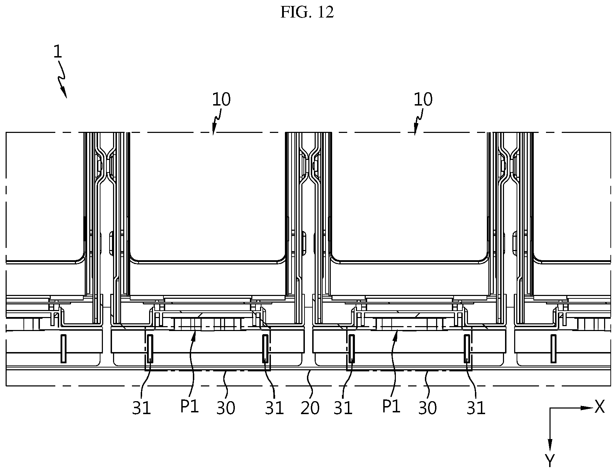

Next, referring to FIG. 12, each of the pair of delay members 30 may be configured such that both a gap between one end facing the pack cover 20 and the pack cover 20 and a gap between the other end facing the module assembly and the module assembly are open.

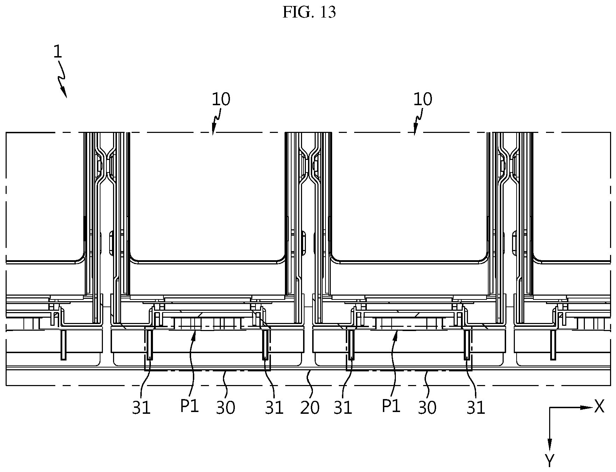

On the other hand, each of the pair of delay plates 31 may be configured such that any one of a gap between one end facing the pack cover 20 and the pack cover 20 and a gap between the other end facing the module assembly and the module assembly is closed, and the other one is open. Referring to FIG. 13, each of the pair of delay plates 31 may be configured such that especially one end facing the pack cover 20 is spaced apart from the pack cover 20. In this case, the flow of the fluid discharged through the discharge portion P1 along the first direction (a direction parallel to the X-axis) may be made in an area adjacent to the pack cover 20, whereby it is possible to minimize the effect of the high-temperature venting gas and spark material discharged from the battery module 10 in which a thermal event occurs on other battery modules 10 in the course of their movement.

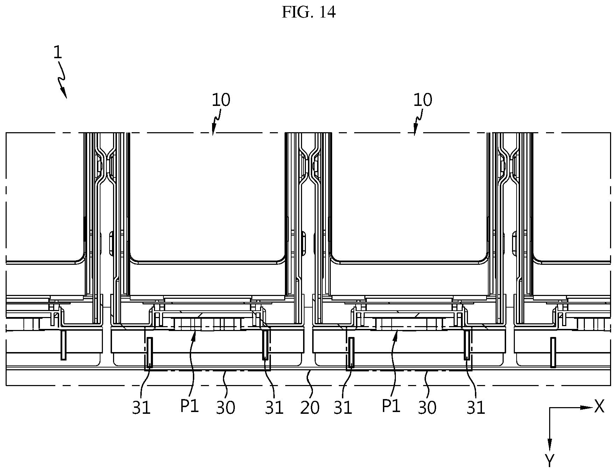

Referring to FIG. 14, any one of the pair of delay plates 31 included in one delay member 30 may be configured such that a gap between the one end and the pack cover 20 is closed and a gap between the other end and the module assembly is open, and the other one may be configured such that a gap between the one end and the pack cover 20 is open and a gap between the other end and the module assembly is closed. In this case, the effect of increasing the moving distance in the flow of the fluid along the first direction (a direction parallel to the X-axis) may be maximized. Such an increase in the moving distance of the fluid may lead to maximizing the effect of suppressing the inflow of external oxygen through the delay of fluid discharge and the effect of reducing the temperature of the venting gas and the spark material.

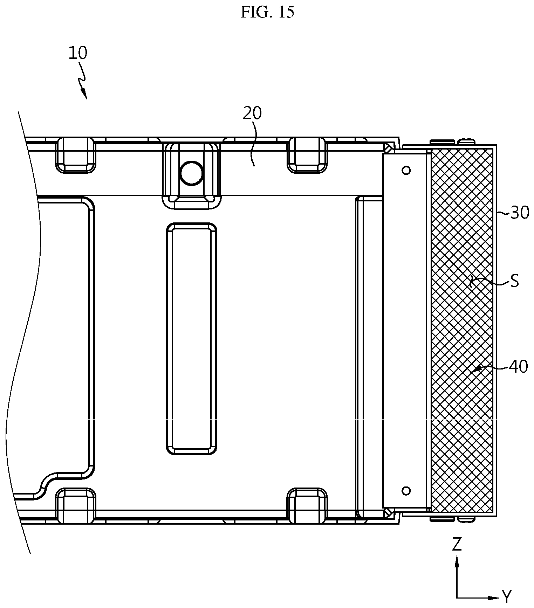

Referring to FIG. 15, the battery pack 1 may include an opening cover 40 configured to cover the opening P2. The opening cover 40 may have, for example, a mesh structure. The mesh structure may be configured such that venting gas may pass through and particles included in the spark material may not pass through. When the opening cover 40 has such a mesh structure, the spark material primarily filtered within the space S is secondarily filtered in the opening P2, and thus the effect of reducing the spark material discharged to the outside of the battery pack 1 may be maximized. When the spark material is filtered by the mesh structure of the opening cover 40 in this way, individual small holes forming the mesh structure may be blocked by the spark material, thereby further improving the effect of blocking the inflow of oxygen from the outside. Meanwhile, since the moving speed of the venting gas, which is a gas, is faster than that of the spark material, the time when the holes forming the mesh structure are blocked by the spark material as described above may be after the time when the internal pressure is sufficiently reduced by the discharge of the venting gas.

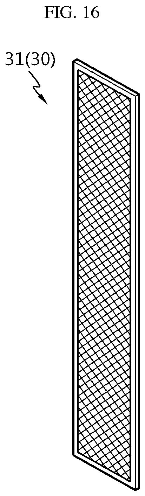

Referring to FIG. 16, at least some of the plurality of delay members 30 may be filters at least partially having a mesh structure. For example, at least one of the pair of delay plates 31 included in the delay member 30 may be a filter having a mesh structure as described above. When the delay member 30 is configured in this way, the filtering effect of the spark material may be further increased, and accordingly, the risk of a fire caused by discharge of the high-temperature spark material to the outside of the battery pack 1 may be further reduced.

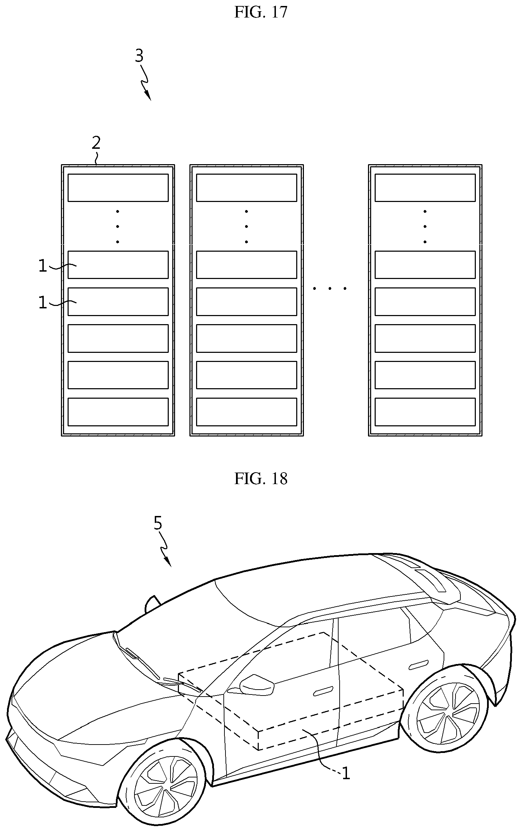

Referring to FIG. 17, an energy storage system (ESS) 3 according to an embodiment of the present disclosure includes a battery pack 1 according to the present disclosure. The ESS 3 may include, for example, a battery system including a plurality of battery packs 1 and a rack housing 2 configured to allow the plurality of battery packs 1 to be stacked therein. The ESS 3 may include one or a plurality of such battery systems.

Referring to FIG. 18, a vehicle 5 according to an embodiment of the present disclosure includes a battery pack 1 according to the present disclosure. The vehicle 5 may be configured to be driven by receiving power from one or a plurality of battery packs 1. The vehicle 5 may be, for example, an electric vehicle (EV) or a hybrid electric vehicle (HEV).

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

### [Reference Signs]

1: battery pack
2: rack housing
3: energy storage system (ESS)
5: vehicle
10: battery module
P1: discharge portion
100: battery cell
110: electrode lead
200: module housing
300: cover frame
20: pack cover
P2: opening
30: delay member
31: delay plate
40: opening cover

## Claims

1. A battery pack comprising:
a module assembly comprising a plurality of battery modules disposed along a first direction;
a pack cover extending along the first direction and configured to cover one side of the module assembly; and
a plurality of delay members disposed to be spaced apart from each other along the first direction within a space formed between the module assembly and the pack cover and configured to delay the flow of fluid moving along the first direction.

2. The battery pack according to claim 1,
wherein the plurality of delay members are configured to delay the flow of venting gas and spark material discharged due to a thermal event occurring in at least some of the plurality of battery modules.

3. The battery pack according to claim 1,
wherein the plurality of delay members are configured to allow the venting gas among the venting gas and spark material discharged due to a thermal event occurring in at least some of the plurality of battery modules to move along the first direction, and at least partially prevent the spark material from moving along the first direction.

4. The battery pack according to claim 1,
wherein each of the plurality of battery modules comprises a discharge portion formed on one side facing the pack cover and configured to discharge venting gas and spark material generated by a thermal event.

5. The battery pack according to claim 1,
which comprises an opening configured such that a space formed between the module assembly and the pack cover communicates with the outside at an end portion of the battery pack in the first direction.

6. The battery pack according to claim 4,
wherein at least one of the plurality of delay members is provided at a position corresponding to the discharge portion.

7. The battery pack according to claim 6,
wherein at least one of the plurality of delay members comprises a pair of delay plates spaced apart from each other along the first direction.

8. The battery pack according to claim 7,
wherein the pair of delay plates have a shape inclined in opposite directions such that a flow path formed between the pair of delay plates gradually widens along a direction from the discharge portion toward the pack cover.

9. The battery pack according to claim 7,
wherein the pair of delay plates have a shape inclined in the same direction such that a flow path formed between the pair of delay plates faces the first direction.

10. The battery pack according to claim 7,
wherein each of the pair of delay plates is configured such that both a gap between one end facing the pack cover and the pack cover and a gap between the other end facing the module assembly and the module assembly are open.

11. The battery pack according to claim 7,
wherein each of the pair of delay plates is configured such that any one of a gap between one end facing the pack cover and the pack cover and a gap between the other end facing the module assembly and the module assembly is closed, and the other one is open.

12. The battery pack according to claim 11,
wherein each of the pair of delay plates is configured such that the one end is spaced apart from the pack cover.

13. The battery pack according to claim 11,
wherein any one of the pair of delay plates is configured such that a gap between the one end and the pack cover is closed, and the other one of the pair of delay plates is configured such that a gap between the other end and the module assembly is closed.

14. The battery pack according to claim 5,
which comprises an opening cover configured to cover the opening and having a mesh structure.

15. The battery pack according to claim 1,
wherein at least some of the plurality of delay members are filters at least partially having a mesh structure.

16. An ESS comprising a battery pack according to any one of claims 1 to 15.

17. A vehicle comprising a battery pack according to any one of claims 1 to 15.
